(19)

Europäisches
Patentamt
European
Patent Office
Office européen
des brevets

(11) **EP 1 865 165 B1**

(12) **EUROPEAN PATENT SPECIFICATION**

(45) Date of publication and mention
of the grant of the patent:
**10.12.2008 Bulletin 2008/50**

(51) Int Cl.:
*F01N 9/00* *(2006.01)*        *F01N 11/00* *(2006.01)*
*F02D 41/02* *(2006.01)*

(21) Application number: **07018722.4**

(22) Date of filing: **12.05.2006**

(54) **Exhaust emission control system for internal combustion engine and control method therefor**

Abgasemissionssteuerungssystem für einen Verbrennungsmotor und Steuerungsverfahren dafür

Système de contrôle d'émissions d'échappement et procédé pour moteur à combustion interne

(84) Designated Contracting States:
**DE GB**

(30) Priority: **13.05.2005 JP 2005141622**
**13.05.2005 JP 2005141623**

(43) Date of publication of application:
**12.12.2007 Bulletin 2007/50**

(62) Document number(s) of the earlier application(s) in
accordance with Art. 76 EPC:
**06009861.3 / 1 722 082**

(73) Proprietor: **HONDA MOTOR CO., LTD.**
**Tokyo 107-8556 (JP)**

(72) Inventors:
  • **Chiba, Isao**
    **Wako-shi**
    **Saitama, 351-0193 (JP)**

  • **Endo, Masatoshi**
    **Wako-shi**
    **Saitama, 351-0193 (JP)**
  • **Okayasu, Kouji**
    **Wako-shi**
    **Saitama, 351-0193 (JP)**
  • **Kaneko, Isao**
    **Wako-shi**
    **Saitama, 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 1 437 486        EP-A1- 1 229 223**
**US-A1- 2004 103 648**

**Description**

BACKGROUND OF THE INVENTION

Field of the Invention

This invention relates to an exhaust emission control system for an internal combustion engine, for collecting particulates from exhaust gases discharged from an internal combustion engine, particularly from a diesel engine, and a control method therefor.

Description of the Related Art

In general, in an exhaust emission control system for a diesel engine, a filter is provided in an exhaust system of the engine so as to collect particulates from exhaust gases discharged from the engine. When the amount of particulates deposited on the filter is large, exhaust pressure increases, resulting in reduced power output of the engine and degraded fuel economy. To prevent the above inconveniences, an exhaust emission control system for an internal combustion engine has been proposed e.g. in Japanese Laid-Open Patent Publication (Kokai) No. H08-284643, which regenerates the filter by heating the filter to burn deposited particulates.

In the proposed exhaust emission control system, during operation of the engine, pressures in an exhaust pipe at respective locations upstream and downstream of the filter are detected, and according to the difference between the former and the latter (hereinafter referred to as "the differential pressure"), the amount of particulates collected by the filter is calculated. A similar exhaust emission control system has been proposed in EP 1 437 486. When the calculated amount of collected particulates is between a lower limit and an upper limit, regeneration of the filter is carried out. Further, in the exhaust emission control system, when the calculated amount of collected particulates exceeds the upper limit amount, it is judged that an excess amount of particulates has been deposited on the filter, so that regeneration of the filter is inhibited. This prevents the filter from being overheated by thermal runaway due to rapid combustion the excess amount of deposited particulates, and being cracked or melted. Further, when the regeneration of the filter is inhibited, a warning lamp is turned on to notify the driver that the an excess amount of particulates has been deposited on the filter.

However, the differential pressure between the upstream and downstream sides of the filter varies not only with the amount of deposited particulates but also with operating conditions of the engine. Particularly when the engine is in a low engine speed condition, such as during idling thereof, the amount of exhaust gases is small, and hence exhaust pressure and the differential pressure are also low. In the conventional exhaust emission control system, however, the amount of collected particulates is simply calculated according to the differential pressure between the upstream and downstream sides of the filter, and therefore there is a fear that the amount of deposited particulates cannot be accurately estimated. For example, when the engine is in a low engine speed condition as described above, the differential pressure becomes smaller, so that the estimated amount of collected particulates is sometimes lower than the upper limit amount, in spite of an excess amount of particulates having been deposited on the filter. In such a case, the regeneration of the filter is not inhibited, so that the filter is overheated due to execution of the regeneration, which can cause cracking or melting of the filter.

Further, there has been proposed a similar exhaust emission control system for an internal combustion engine has been proposed in Japanese Laid-Open Patent Publication (Kokai) No. H05-332125. The exhaust emission control system calculates the amount of particulates discharged from the engine per unit time based on the rotational speed and the accelerator pedal opening of the engine, installed on an automotive vehicle, and corrects the amount of particulates according to detected engine coolant temperature. Further, the corrected amount of particulates is added to the cumulative amount of deposited particulates calculated hitherto, to thereby calculate the current amount of deposited particulates. Then, when the calculated amount of deposited particulates exceeds a threshold value, the filter is heated with a heater to start regeneration operation of the filter. Further, during the regeneration operation, the amount of particulates burned in the filter per unit time is calculated based on the detected temperature of the filter, and the current amount of deposited particulates is calculated by subtracting the calculated amount of burned particulates from the immediately preceding value of the amount of deposited particulates. When the calculated amount of deposited particulates drops below the threshold value, the regeneration operation of the filter is terminated. When the regeneration operation is terminated, the amount of deposited particulates is set to an initial value.

As described above, the conventional exhaust emission control system calculates the amount of particulates deposited on the filter according to the rotational speed of the engine, the accelerator pedal opening, the engine coolant temperature, and the temperature of the filter. However, the actual amount of deposited particulates also varies with the temperature and pressure of air drawn into the filter, etc. The conventional exhaust emission control system however, simply calculates the amount of deposited particulates according to the above-described parameters, which makes it possible to accurately calculate the amount of deposited particulates, and the calculated amount is low in reliability. Therefore, for example, when the amount of deposited particulates is estimated to be smaller than the actual amount thereof, timing for terminating the regeneration operation of the filter is made earlier than proper timing, whereby it is impossible to perform a sufficient regeneration operation of the filter. This causes some amount of particulates to remain deposited on the filter. On the other hand, when the amount of deposited particulates is estimated to be larger than the actual amount thereof, the timing for terminating the regeneration operation of the filter is made later than the proper timing, whereby electric energy for driving the heater is wastefully consumed. Also, when the regeneration operation of the filter is executed e.g. by supplying an increased amount of fuel to a combustion chamber, excess supply of fuel results in degraded fuel economy.

Further, in the conventional exhaust emission control system, when the regeneration operation of the filter is terminated, the amount of deposited particulates is set to the initial value, and hence if the timing for terminating the regeneration operation is made earlier or later, as described above, an initial value different from the present and actual amount of deposited particulates is set. When the initial value thus deviates from the proper value, the amount of deposited particulates, which is calculated by adding the amount of discharged particulates to the initial value, is further degraded in reliability.

## SUMMARY OF THE INVENTION

The object of the present invention is to provide an exhaust emission control system for an internal combustion engine, which is capable of properly setting timing for terminating the regeneration operation of a filter, thereby positively regenerating the filter and reducing time and energy required to regenerate the filter, and a control method therefor.

To attain the above object, in a first aspect of the present invention, there is provided an exhaust emission control system for an internal combustion engine, for reducing exhaust emissions by collecting particulates from exhaust gases discharged from the engine to an exhaust system, comprising a filter provided in the exhaust system, for collecting particulates from the exhaust gases, regeneration operation-executing means for executing a regeneration operation for regenerating the filter by burning the particulates deposited on the filter, a differential pressure sensor for detecting a differential pressure between upstream and downstream sides of the filter in the exhaust system, differential pressure change amount-calculating means for calculating an amount of change in the detected differential pressure in the exhaust system, and regeneration operation-terminating means for terminating the regeneration operation for regenerating the filter by the regeneration operation-executing means when a state in which the calculated amount of change in the differential pressure is not larger than a predetermined threshold value has continued for a predetermined time period during execution of the regeneration operation by the regeneration operation-executing means.

With the configuration of the exhaust emission control system according to the first aspect of the present invention, the filter collects particulates from exhaust gases, and the regeneration operation-executing means burns the collected particulates by executing the regeneration operation for regenerating the filter, whereby the filter is regenerated. Further, the differential pressure sensor detects the differential pressure between upstream and downstream sides of the filter, and the differential pressure change amount-calculating means calculates the amount of change in the detected differential pressure. The regeneration operation-terminating means terminates the regeneration operation, when a state in which the calculated amount of change in the differential pressure is not larger than a threshold value has continued for a predetermined time period during execution of the regeneration operation.

When particulates start to be burned by execution of the regeneration operation for regenerating the filter, the differential pressure between the upstream and downstream sides of the filter is reduced along with the combustion. Further, as the combustion of particulates proceeds to decrease the amount of deposition of the particulates, the differential pressure almost ceases to be reduced whereby the amount of change in the differential pressure converges within a substantially fixed small range. According to the first aspect of the present invention, when the state in which the amount of change in the differential pressure is not larger than the threshold value has continued for a predetermined time period during execution of the regeneration operation, it is judged that the amount of change in the differential pressure has converged, and hence the regeneration of the filter has been completed, so that the regeneration operation of the filter is terminated. This makes it possible to terminate the regeneration operation in appropriate timing dependent on the actual completion of the regeneration of the filter. As a result, it is possible to positively regenerate the filter and reduce time and energy required to regenerate the filter.

Preferably, the exhaust emission control system further comprises exhaust gas flow rate-detecting means for detecting a flow rate of exhaust gases discharged from the engine, and differential pressure-correcting means for correcting the detected differential pressure according to the detected flow rate of exhaust gases, and the differential pressure change amount-calculating means calculates the amount of change in the differential pressure based on the corrected differential pressure.

The differential pressure between upstream and downstream sides of the filter varies with the flow rate of exhaust gases, such that it becomes smaller as the flow rate of exhaust gases is smaller. With the configuration of this preferred embodiment, the exhaust gas flow rate-detecting means detects the flow rate of exhaust gases discharged from the engine, and the differential pressure-correcting means corrects the detected differential pressure according to the detected flow rate of exhaust gases. The differential pressure change amount-calculating means calculates the amount of change in the differential pressure based on the corrected differential pressure. Since the amount of change in the differential pressure is thus calculated based on the differential pressure corrected according to the flow rate of exhaust gases, it is possible to eliminate influence of a change in the exhaust gas flow rate on the differential pressure. As a result, it is possible to terminate the regeneration operation of the filter based on the amount of change in the differential pressure, in more appropriate timing in which the regeneration of the filter is completed.

Preferably, the engine is installed on an automotive vehicle, as a drive source, and the regeneration operation for regenerating the filter by the regeneration operation-executing means is executed during service inspection of the vehicle.

With this configuration of the preferred embodiment, the engine is installed on an automotive vehicle, and when the vehicle is brought to a service station, the regeneration operation by the regeneration operation-executing means is executed during service inspection of the vehicle. Since the regeneration operation of the filter is thus performed during service inspection of the vehicle, the differential pressure is hardly adversely affected by changes in operating conditions of the engine, and therefore it is possible to terminate the regeneration operation in appropriate timing based on the amount of change in the differential pressure. Particularly, it is possible to reduce time and energy required to regenerate the filter during service inspection of the vehicle.

To attain the above object, in a second aspect of the present invention, there is provided a method of controlling an exhaust emission control system for an internal combustion engine, the exhaust emission control system including a filter provided in an exhaust system, for collecting particulates from the exhaust gases, and a differential pressure sensor for detecting a differential pressure between upstream and downstream sides of the filter in the exhaust system, and reducing exhaust emissions by collecting particulates from exhaust gases discharged from the engine to the exhaust system, comprising a regeneration operation-executing step of executing a regeneration operation for regenerating the filter by burning the particulates deposited on the filter, a differential pressure change amount-calculating step of calculating an amount of change in the detected differential pressure in the exhaust system, and a regeneration operation-terminating step of terminating the regeneration operation for regenerating the filter in the regeneration operation-executing step when a state in which the calculated amount of change in the differential pressure is not larger than a predetermined threshold value has continued for a predetermined time period during execution of the regeneration operation in the regeneration operation-executing step.

Preferably, the method further comprises an exhaust gas flow rate-detecting step of detecting a flow rate of exhaust gases discharged from the engine, and a differential pressure-correcting step of correcting the detected differential pressure according to the detected flow rate of exhaust gases, and the differential pressure change amount-calculating step includes calculating the amount of change in the differential pressure based on the corrected differential pressure.

Preferably, the engine is installed on an automotive vehicle, as a drive source, and the regeneration operation for regenerating the filter in the regeneration operation-executing step is executed during service inspection of the vehicle.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an internal combustion engine to which is applied an exhaust emission control system according to the present invention;

FIG. 2 is a flowchart showing a regeneration control process, which does not form part of the present invention, executed during traveling of a vehicle, for control of regeneration of a filter;

FIG. 3 is a flowchart showing an excess deposition-determining process, which does not form part of the present invention, executed during service inspection of the vehicle, for determining whether or not the filter is in an excess PM deposited state;

FIG. 4 is a flowchart according to the invention showing a regeneration control process executed during service inspection of the vehicle, for control of regeneration of the filter; and

FIG. 5 is a timing diagram showing examples of operations of the regeneration control process executed during service inspection of the vehicle, for control of regenerating of the filters.

DETAILED DESCRIPTION OF PREFERRED EMBODIMENTS

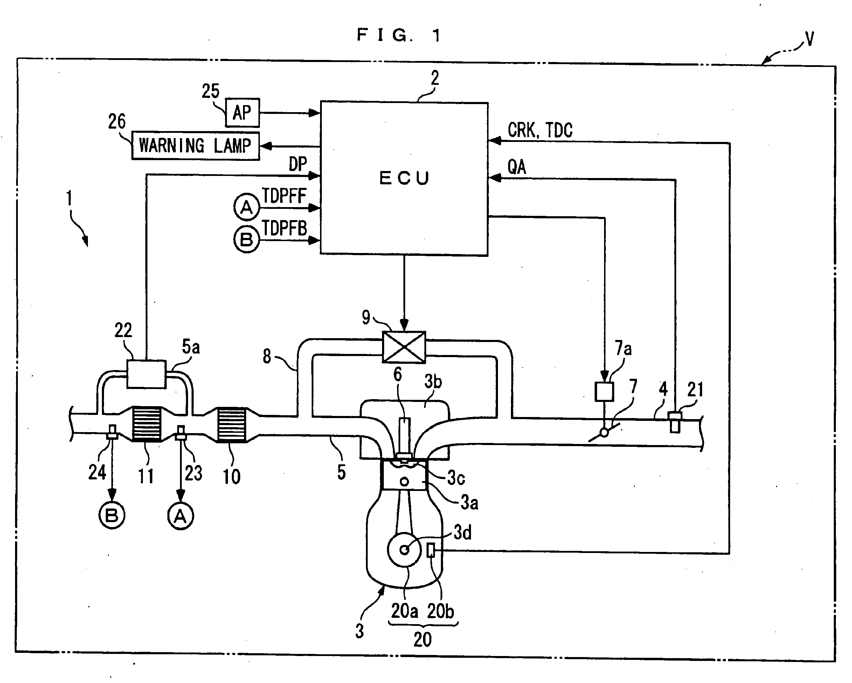

The present invention will now be described in detail with reference to the drawings showing preferred embodiments thereof. Referring first to FIG. 1, there is schematically shown the arrangement of an internal combustion engine (hereinafter simply referred to as "the engine") 3 to which is applied an exhaust emission control system 1 according to an embodiment of the present embodiment. The engine 3 is a diesel engine having e.g. four cylinders (only one of which is shown), and installed on an automotive vehicle V.

The engine 3 has a piston 3a and a cylinder head 3b provided on a cylinder-by-cylinder basis. The piston 3a and the cylinder head 3b define a combustion chamber 3c. The cylinder head 3b has an intake pipe 4 and an exhaust pipe 5 (exhaust system) connected thereto, with a fuel injection valve (hereinafter referred to as "the injector") 6 mounted therethrough such that it faces the combustion chamber 3c.

The injector 6 (filter regeneration means and regeneration operation-executing means) is inserted into the combustion chamber 3c through a central portion of the top wall thereof, and is connected to a high-pressure pump and then to a fuel tank, neither of which is shown, via a common rail. The valve-opening time period and valve-opening timing of the injector 6 are controlled by a drive signal delivered from the ECU 2, whereby a fuel injection amount QINJ and fuel injection timing are controlled.

Further, a magnet rotor 20a is mounted on a crankshaft 3d of the engine 3. The magnet rotor 20a and an MRE pickup 20b form a crank angle sensor 20 (first deposition amount-estimating means and exhaust gas flow rate-detecting means) which delivers a CRK signal and a TDC signal, which are both pulse signals, to the ECU 2 along with rotation of the crankshaft 3d.

Each pulse of the CRK signal is generated whenever the crankshaft 3d rotates through a predetermined crank angle (e.g. 30°). The ECU 2 calculates rotational speed NE of the engine 3 (hereinafter referred to as "the engine speed NE") based on the CRK signal. The TDC signal indicates that the piston 3a of each cylinder is at a predetermined crank angle position in the vicinity of the top dead center (TDC) at the start of the suction stroke thereof, and in the case of the four-cylinder engine of the illustrated example, it is delivered whenever the crankshaft 3d rotates through 180 degrees.

The intake pipe 4 has an intake throttle valve 7 provided therein for adjusting the amount of intake air (intake air amount). To the intake throttle valve 7 is connected an actuator 7a e.g. comprised of a DC motor. The degree of opening of the intake throttle valve 7 is controlled by controlling the duty ratio of an electric current supplied to the actuator 7a, with the ECU 2. Further, the intake pipe 4 has an air flow sensor 21 (exhaust gas flow rate-detecting means) inserted therein at a location upstream of the intake throttle valve 7. The air flow sensor 21 detects an intake air amount QA, and delivers a signal indicative of the sensed intake air amount QA to the ECU 2.

Further, an EGR passage 8 is connected between the intake pipe 4 and the exhaust pipe 5. The EGR passage 8 connects between the exhaust pipe 5 and a portion of the intake pipe 4 at a location downstream of the intake throttle valve 7. Part of exhaust gases of the engine 3 is recirculated into the intake pipe 4 via the EGR passage 8 as EGR gases, whereby combustion temperature in the combustion chamber 3c is lowered to reduce NOx in the exhaust gases.

Further, the EGR passage 8 has an EGR valve 9 disposed therein. The EGR valve 9 is implemented by a linear solenoid valve, and the valve lift amount thereof is controlled by a drive signal under duty ratio control from the ECU 2, whereby the amount of recirculated EGR gases is controlled.

Further, the exhaust pipe 5 has an oxidation catalyst 10 and a filter 11 arranged therein at respective locations downstream of the EGR passage 8 from upstream to downstream in the mentioned order. The oxidation catalyst 10 oxidizes HC and CO in exhaust gases to reduce exhaust emissions.

The filter 11 has a honeycomb core (not shown) formed e.g. of a porous ceramic, and is configured such that it collects particulates (hereinafter simply referred to as "PM" (Particulate Matter)), such as soot, from exhaust gases to thereby reduce the amount of PM emitted into the air. Further, the honeycomb core of the filter 11 carries the same oxidation catalyst (not shown) as the oxidation catalyst 10. As described above, since the filter 11 carries an oxidation catalyst, the temperature of the filter 11 is raised by the oxidation reaction of the oxidation catalyst, whereby PM is burned.

Furthermore, the exhaust pipe 5 has a pressure-introducing passage 5a connected thereto in a manner bypassing the filter 11 (i.e. communicating between a portion of the exhaust pipe 5 between the oxidation catalyst 10 and the filter 11 and a portion of the same downstream of the filter 11). A differential pressure sensor 22 (second deposition amount-estimating means) is interposed at an intermediate portion of the pressure-introducing passage 5a. The differential pressure sensor 22 detects the difference between pressures upstream and downstream of the filter 11 in the exhaust pipe 5 (hereinafter referred to as "the differential pressure DP"), and delivers a signal indicative of the sensed differential pressure DP to the ECU 2. When the amount of PM deposited on the filter 11 (hereinafter referred to as "the PM deposition amount") is small, the air flow resistance of the filter decreases to reduce the differential pressure DP, whereas when the PM deposition amount is large, the air flow resistance of the filter increases to increase the differential pressure DP. This makes it possible to estimate the PM deposition amount according to the differential pressure DP.

Further, a first exhaust gas temperature sensor 23 and a second exhaust gas temperature sensor 24 are inserted into the exhaust pipe 5 at respective locations immediately upstream and downstream of the filter 11. The first exhaust gas temperature sensor 23 detects the temperature TDPFF of exhaust gases immediately upstream of the filter 11 (hereinafter referred to as "the pre-filter gas temperature TDPFF"), and the second exhaust gas temperature sensor 24 detects the temperature TDPFB of exhaust gases immediately downstream of the filter 11 (hereinafter referred to as "the post-filter gas temperature TDPFB"). The first and second exhaust gas temperature sensors 23 and 24 delivers signals indicative of the sensed exhaust gas temperatures TDPFF and TDPFB to the ECU 2.

Furthermore, an accelerator pedal opening sensor 25 detects the degree of opening or stepped-on amount AP of an accelerator pedal, not shown, of the vehicle (hereinafter referred to as "the accelerator pedal opening AP"), and delivers a signal indicative of the sensed accelerator pedal opening AP to the ECU 2. Further, to the ECU 2 is connected a warning lamp 26 which is used to notify the driver that the filter 11 is in a state in which an excess amount of PM has been deposited thereon (hereinafter referred to as "the excess PM-deposited state).

The ECU 2 (first deposition amount-estimating means, filter regeneration means, engine speed-increasing means, second deposition amount-estimating means, filter regeneration-inhibiting means, traveling-time filter regeneration-inhibiting means, regeneration operation-executing means, differential pressure change amount-calculating means, regeneration operation-terminating means, exhaust gas flow rate-detecting means, and differential pressure-correcting means) is implemented by a microcomputer comprised of an I/O interface, a CPU, a RAM, and a ROM. The detection signals from the aforementioned sensors 20 - 25 are input to the CPU after the I/O interface performs A/D conversion and waveform shaping thereon.

In response to these input signals, the CPU executes a regeneration control process for regenerating the filter 11 during traveling or service inspection of the vehicle V, in accordance with control programs read from the ROM. In this process, the regeneration operation for regenerating the filter 11 is performed by post injection for additionally injecting fuel into the combustion chamber 3c during the expansion stroke or the exhaust stroke of each cylinder. The amount POSTQ of fuel injected by the post injection (hereinafter referred to as "the post injection amount POSTQ") is controlled based on the pre-filter gas temperature TDPFF such that the temperature of the filter 11 becomes equal to a target temperature (e.g. 600 °C). Thus, the filter 11 is controlled to be in a high-temperature condition so as to burn PM deposition thereon, whereby the filter 11 is regenerated.

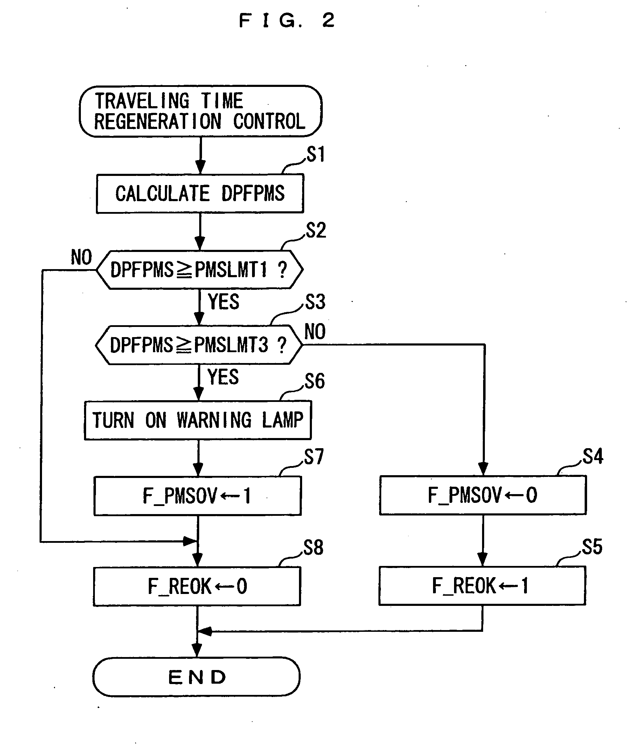

FIG. 2 is a flowchart showing the regeneration control process, which does not form part of the present invention, executed during traveling of the vehicle V, for control of regeneration of the filter 11. This process is carried out in synchronism with generation of the TDC signal. In the present process, first, in a step 1 (shown as S1 in abbreviated form in FIG. 2; the following steps are also shown in abbreviated form), the PM deposition amount DPFPMS is calculated. More specifically, the PM deposition amount DPFPMS is calculated as follows: First, the amount of PM discharged from the engine 3 per TDC event i.e. per combustion of the mixture is calculated by searching a PM discharge amount map, not shown, according to the engine speed NE and the fuel injection amount QINJ. Further, the amount of PM burned in the filter 11 for regeneration thereof is calculated by searching a regeneratingly-burned PM amount map, not shown, according to the amount of oxygen in the filter and the temperature of the filter. It should be noted that the amount of oxygen in the filter is determined according to the fuel injection amount QINJ and the intake air amount QA, and the temperature of the filter is determined according to the intake air amount QA, the pre-filter gas temperature TDPFF, and the differential pressure DP.

Next, the PM deposition amount per TDC event is calculated by subtracting the amount of PM burned for filter regeneration from the calculated amount of discharged PM. Then, the calculated PM deposition amount per TDC event is added to the cumulative value of PM deposition amounts each calculated per TDC event thus far (immediately preceding value of the PM deposition amount DPFPMS) to thereby calculate the current PM deposition amount DPFPMS. It should be noted that the current PM deposition amount DPFPMS is reset when the regeneration operation for regenerating the filter is completed.

Then, it is determined whether or not the calculated PM deposition amount DPFPMS is not smaller than a first predetermined threshold value PMSLMT1 (step 2). If the answer to this question is negative (NO), i.e. if DPFPMS < PMSLMT1 holds, it is judged that the regeneration operation is not to be carried out since the PM deposition amount DPFPMS is relatively small, and the process proceeds to a step 8, wherein a filter regeneration flag F_REOK is set to 0, followed by terminating the present process.

On the other hand, if the answer to the question of the step 2 is affirmative (YES), i.e. if DPFPMS ≧ PMSLMT1 holds, it is determined whether or not the PM deposition amount DPFPMS is not smaller than a third predetermined threshold value PMSLMT3 larger than the first threshold value PMSLMT1 (step 3). If the answer to this question is negative (NO), i.e. if PMSLMT1 ≦ DPFPMS < PMSLMT3 holds, it is judged that the filter 11 is not in the excess PM-deposited state though the PM deposition amount DPFPMS is relatively large, and an excess deposition flag F_PMSOV is set to 0 (step 4). Further, it is judged that the regeneration operation should be executed, and the filter regeneration flag F_REOK is set to 1 (step 5), followed by terminating the present process.

On the other hand, if the answer to the question of the step 3 is affirmative (YES), i.e. if DPFPMS ≧ PMSLMT3 holds, it is judged that the filter 11 is in the excess PM-deposited state, and the warning lamp 26 is turned on to notify the driver of the fact (step 6), while the excess deposition flag F_PMSOV is set to 1 (step 7). Further, to avoid occurrence of cracking or melting of the filter 11 caused by performing the regeneration of the filter 11 in the excess PM-deposited state, it is judged that the regeneration operation is not to be performed, but the step 8 is executed, followed by terminating the present process.

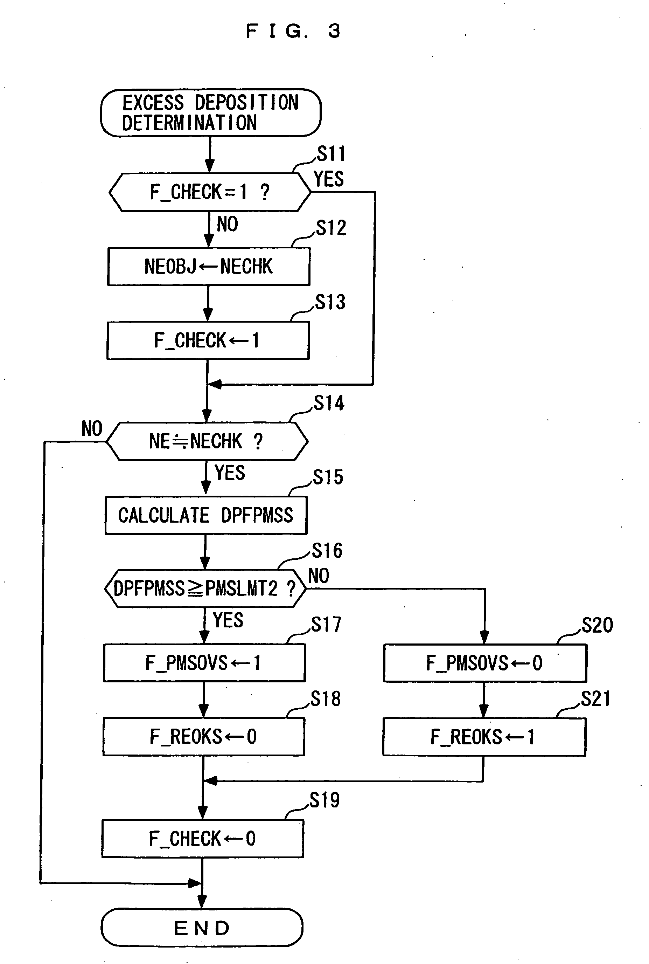

FIG. 3 is a flowchart showing an excess deposition-determining process, which does not form part of the present invention, carried out during service inspection of the vehicle V, for determining whether or not the filter is in the excess PM-deposited state. It should be noted that the service inspection is performed in a service station after the driver noticing lighting of the warning lamp 26 brings the vehicle V to the service station. Further, the excess deposition-determining process is carried out at predetermined time intervals by delivering a start signal from an external diagnosis machine, not shown, to the ECU 2. In the present process, first, it is determined in a step 11 whether or not a determination execution flag F_CHECK is equal to 1.

If the answer to this question is negative (NO), a target engine speed NEOBJ of the engine speed NE is set to a predetermined engine speed NECHK (e.g. 2800 rpm) for excess deposition determination (step 12). By thus setting the target engine speed NEOBJ, the engine speed NE is controlled such that it is increased to the engine speed NECHK for excess deposition determination. Then, the determination execution flag F_CHECK is set to 1 (step 13), and then the process proceeds to a step 14. Since the step 13 is executed in the second and following loops of the present process, the answer to the question of the step 11 becomes affirmative (YES) hereafter, and in this case, the process immediately proceeds to the step 14.

In the step 14, it is determined whether or not the engine speed NE is approximately equal to the engine speed NECHK for excess deposition determination. If the answer to this question is negative (NO), the present process is immediately terminated. On the other hand, if the answer to the question of the step 14 is affirmative (YES), i.e. if the engine speed NE is approximately equal to the engine speed NECHK, a PM deposition amount DPFPMSS is calculated according to the differential pressure DP detected by the differential pressure sensor 22 (step 15). Then, it is determined whether or not the calculated amount DPFPMSS is not smaller than a second predetermined threshold value PMSLMT2 larger than the third threshold value PMSLMT3 (step 16). If the answer to this question is affirmative (YES), i.e. if DPFPMSS $\geqq$ PMSLMT2 holds, it is judged that the differential pressure DP between the upstream and downstream sides of the filter 11 is large, and the filter 11 is in the excess PM-deposited state, and to indicate the fact, the excess deposition flag F_PMSOVS is set to 1 (step 17). Further, to avoid occurrence of cracking or melting of the filter 11 caused by performing the regeneration operation for regenerating the filter 11 in the excess PM-deposited state thereof, it is judged that the regeneration operation is to be inhibited, and hence the filter regeneration flag F_REOKS is set to 0 (step 18). Then, to indicate that the determination is terminated, the determination execution flag F_CHECK is set to 0 (step 19), followed by terminating the present process.

On the other hand, if the answer to the question of the step 16 is negative (NO), i.e. if DPFPMSS < PMSLMT2 holds, it is judged that the filter 11 is not in the excess PM-deposited state, and hence the excess deposition flag F_PMSOVS is set to 0 (step 20). Then, the filter regeneration flag F_REOKS is set to 1 (step 21), and thereafter the step 19 is executed, followed by terminating the present process.

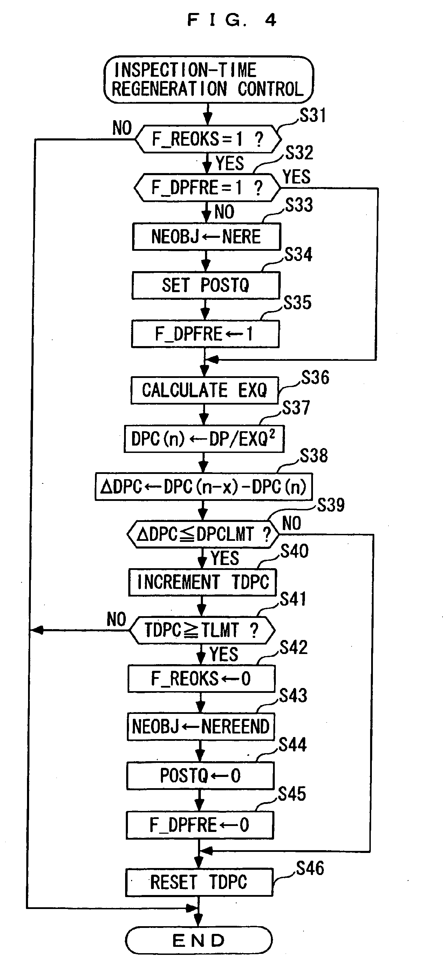

FIG. 4 is a flowchart showing a regeneration control process according to the invention executed during the service inspection of the vehicle V according to the result of determination carried out in the excess deposition-determining process, for controlling regeneration of the filter 11. The present process is carried out in synchronism with generation of the TDC signal. In the present process, first, it is determined in a step 31 whether or not the filter regeneration flag F_REOKS set in the step 18 or the step 21 in FIG. 3 is equal to 1. If the answer to this question is negative (NO), the present process is immediately terminated without performing the regeneration operation for regenerating the filter 11.

On the other hand, if the answer to the question of the step 31 is affirmative (YES), i.e. if F_REOKS = 1 holds, it is determined whether or not a regeneration execution flag F_DPFRE is equal to 1 (step 32). If the answer to this question is negative (NO), the target engine speed NEOBJ of the engine speed NE is set to a predetermined regeneration control engine speed NERE (e.g. 1500 rpm) for filter regeneration control (step 33). By thus setting the target engine speed NEOBJ, the engine speed NE is controlled such that it becomes equal to the regeneration control engine speed NERE for filter regeneration control. Then, a post injection amount POSTQ is set according to the engine speed NE and the accelerator pedal opening AP (step 34), whereby the regeneration operation for regenerating the filter 11 is started and the regeneration execution flag F_DPFRE is set to 1 (step 35), followed by the process proceeding to a step 36. If the answer to the question of the step 32 is affirmative (YES), i.e. if the regeneration operation is being performed, the process immediately proceeds to the step 36.

In the step 36, the flow rate EXQ of exhaust gases discharged from the engine 3 (hereinafter referred to as "the exhaust gas flow rate EXQ") is calculated. The exhaust gas flow rate EXQ is determined by the characteristic equation of gases e.g. according to the engine speed NE and the intake air amount QA. Then, the differential pressure DP is divided by the square $EXQ^2$ of the calculated exhaust gas flow rate EXQ, whereby the current corrected differential pressure DPC(n) is calculated (step 37). The differential pressure DP is corrected based on the exhaust gas flow rate EXQ, as described above, because the differential pressure DP varies with the exhaust gas flow rate EXQ even when the PM deposition amount DPFPMSS remains the same.

Further, the differential pressure DP is divided by the square $EXQ^2$ of the calculated exhaust gas flow rate for the following reason: The following equation (1) represents the relationship between the volumetric flow rate Q of exhaust gases passing through an orifice, the cross-sectional area A of the orifice, and respective pressures P1 and P2 on upstream and downstream sides of the orifice (orifice equation). Further, equations (2) and (3) are variations of the equation (1).

$$Q = Cd \cdot A \sqrt{2 \cdot \frac{P1 - P2}{\rho}} \qquad \cdots\cdots (1)$$

$$P1 - P2 = \frac{\rho}{2 \cdot (Cd \cdot A)^2} \cdot Q^2 \qquad \cdots\cdots (2)$$

$$\frac{P1 - P2}{Q^2} = \frac{\rho}{2 \cdot (Cd \cdot A)^2} \qquad \cdots\cdots (3)$$

wherein Cd represents the discharge coefficient of the orifice, and $\rho$ the density of the fluid. If the cross-sectional area A of the orifice is fixed, it is apparent from the equation (2) that the differential pressure (P1 - P2) between the upstream and downstream sides of the orifice is proportional to the square $Q^2$ of the volumetric flow rate, and it is apparent from the equation (3) that the differential pressure (P1 - P2)/the square $Q^2$ of the volumetric flow rate is constant. Therefore, when the effective cross-sectional area of the filter 11 is regarded as the cross-sectional area A in the above equations, and the exhaust gas flow rate EXQ as the volumetric flow rate Q, from the equation (3), $DP/EXQ^2$ assumes a value corresponding to the effective cross-sectional area of the filter 11. If this value remains substantially fixed, that is, if it no longer undergoes substantially any change, it can be determined that the regeneration of the filter 11 has been completed. It should be noted that the above-described corrected differential pressure DPC (corrected differential pressure) is subjected to a filtering process, whereby the pulsation of the differential pressure DP caused by the pulsation of exhaust gases, and noise components are eliminated.

In a step 38 following the step 37, the difference (= DPC(n-x) - DPC(n)) between a corrected differential pressure DPC(n-x) calculated a predetermined x number of TDC events earlier (e.g. a time period equivalent to 30 seconds earlier) and the current corrected differential pressure DPC(n) is calculated as a differential pressure change amount $\Delta$ DPC (amount of change in the differential pressure). It should be noted that the corrected differential pressure DPC is stored e.g. by using a ring buffer.

Then, it is determined whether or not the differential pressure change amount $\Delta$ DPC is not larger than a predetermined threshold value DPCLMT (step 39). If the answer to this question is negative (NO), it is judged that the effective cross-sectional area of the filter 11 is increasing in the course of regeneration of the filter 11, and therefore the regeneration operation for regenerating the filter 11 is to be continued, and the process proceeds to a step 46, referred to hereinafter, followed by terminating the present process.

On the other hand, if the answer to the question of the step 39 is affirmative (YES), i.e. if $\Delta$ DPC $\leqq$ DPCLMT holds, the counter value TDPC of a counter (not shown) is incremented (step 40), and it is determined whether or not the counter value TDPC is not smaller than a predetermined value TLMT (e.g. equivalent to 150 seconds) (step 41).

If the answer to this question is negative (NO), i.e. if TDPC < TLMT holds, the present process is immediately terminated. On the other hand, if the answer to the question of the step 41 is affirmative (YES), i.e. if a state in which the differential pressure change amount $\Delta$ DPC is not larger than the threshold value DPCLMT has continued for a predetermined time period equivalent to the predetermined value TLMT, it is judged that the effective cross-sectional area of the filter 11 has converged to a substantially fixed value, and hence the regeneration of the filter 11 has been terminated, and to indicate the fact, the filter regeneration flag F_REOKS is set to 0 (step 42).

Then, to terminate the regeneration operation, the target engine speed NEOBJ is set to a predetermined engine speed NEREEND (e.g. 850 rpm) for terminating the regeneration operation (step 43), and the post injection amount POSTQ is set to 0 (step 44). Further, the regeneration execution flag F_DPFRE is set to 0 (step 45), and the counter value TDPC is reset (step 46), followed by terminating the present process.

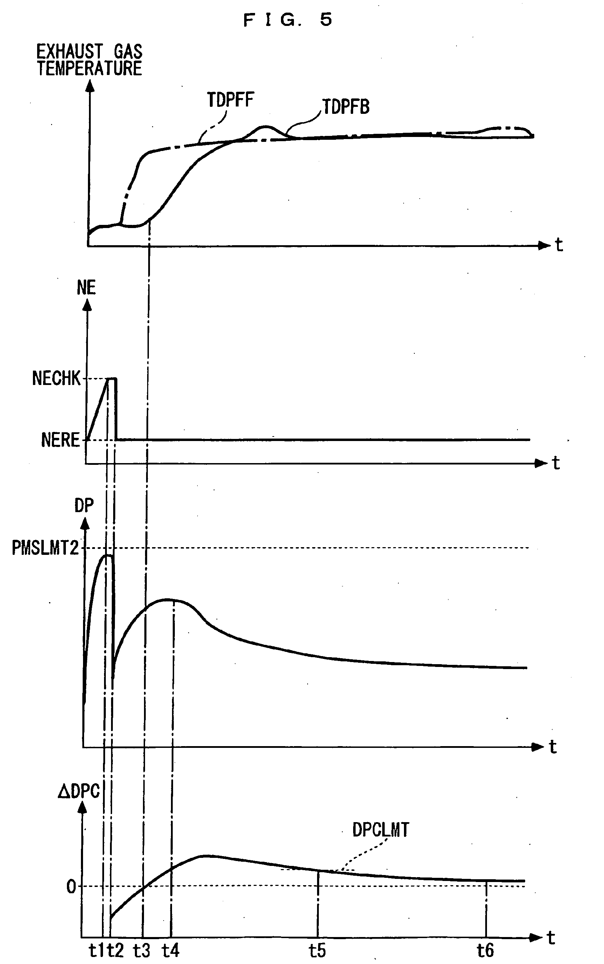

FIG. 5 is a timing diagram showing examples of operations carried out in the processes shown in FIGS. 3 and 4 in the case where it is determined that the filter 11 is not in the excess PM-deposited state, and the regeneration operation for regenerating the filter 11 is performed. First, the engine speed NE is increased to the engine speed NECHK for excess deposition determination (t1). As the engine speed NE is increased, the amount of exhaust gases is increased to increase exhaust pressure, so that the differential pressure DP increases. At this time, when the differential pressure DP is smaller than the second threshold value PMSLMT2, it is determined that the filter 11 is not in the excess PM-deposited state, and based on the determination, the engine speed NE is set to the regeneration control engine speed NERE, and the post injection is performed to thereby start the regeneration operation (t2).

The temperature of exhaust gases rises in accordance with the regeneration operation, causing the pre-filter gas temperature TDPFF to rise progressively, and the temperature of the filter 11 also rises progressively along therewith. When the temperature of the filter 11 has risen to a temperature close to a target temperature (e.g. 600°C), the PM stats to be burned in the filter 11, whereby the post-filter gas temperature TDPFB as well starts to rise (t3). As the PM is burned, the effective cross-sectional area of the filter 11 increases to decrease the air flow resistance of the filter, whereby the differential pressure DP starts to decrease (t4). The differential pressure DP further decreases along with the progress of the burning of the PM, and the decreasing slope of the differential pressure DP becomes progressively gentler, whereby the differential pressure change amount Δ DPC progressively decreases to become lower than the threshold value DPCLMT (t5). Then, when the state where the differential pressure change amount Δ DPC is lower than the threshold value DPCLMT has continued for a predetermined time period (t6), it is judged that the regeneration of the filter 11 has been completed, and hence the regeneration operation is terminated.

As described above, according to the present embodiment, during traveling of the vehicle V, the PM deposition amount DPFPMS is calculated according to the operating conditions of the engine 3, and the regeneration operation is carried out when the first threshold value PMSLMT1 ≦ the PM deposition amount DPFPMS < the third threshold value PMSLMT3 holds (YES to the step 2, and No to the step 3 in FIG. 2). On the other hand, when the PM deposition amount DPFPMS ≧ the third threshold value PMSLMT3 holds (YES to the step 3 in FIG. 2), it is judged that the filter 11 is in the excess PM-deposited state, and the warning lamp 26 is turned on. After the driver noticing lighting of the warning lamp 26 brings the vehicle V to a service station, in a service inspection executed therein, the PM deposition amount DPFPMSS is calculated according to the differential pressure DP detected in a state where the engine speed NE is increased to the engine speed NECHK for excess deposition determination, and when the calculated PM deposition amount DPFPMSS is not smaller than the second threshold value PMSLMT2, it is determined that the filter 11 is actually in the excess PM-deposited state, so that the regeneration operation is inhibited.

As described above, the estimation of the PM deposition amount DPFPMSS according to the differential pressure DP can be made accurate by executing the estimation according to the differential pressure DP detected when the engine speed NE has been largely increased to the engine speed NECHK for excess deposition determination. Further, when the estimated amount DPFPMSS is not smaller than the second threshold value PMSLMT2, it is judged that the filter 11 is in the excess PM-deposited state, whereby it is possible to properly inhibit the regeneration operation. This makes it possible to positively prevent occurrence of cracking or melting of the filter 11 caused by overheat thereof.

Further, even when the vehicle V is brought to a service station e.g. when the driver notices the lighting of the warning lamp 26, it is confirmedly determined whether or not the filter 11 is in the excess PM-deposited state, based on the PM deposition amount DPFPMSS estimated according to the differential pressure DP, without performing the regeneration operation for regenerating the filter 11 immediately after the vehicle V is brought to the service station. This makes it possible to confirmedly and accurately determine whether or not the filter 11 is actually in the excess PM-deposited state, irrespective of reliability of the determination performed during traveling of the vehicle V. Further, according to the results of the determination, appropriate measures can be taken. More specifically, when it is determined that the filter 11 is in the excess PM-deposited state, the regeneration operation is inhibited, and the filter 11 can be replaced by another, for example, whereas when it is determined that the filter 11 is not in the excess PM-deposited state, the regeneration operation can be carried out. Furthermore, the PM deposition amount DPFPMSS can be estimated only by increasing the engine speed NE, without causing the vehicle V to travel, and therefore, it is possible to perform the above determination easily in the service station as well.

Furthermore, in the service inspection of the vehicle V, it is judged that the filter 11 is in the excess PM-deposited state, when the PM deposition amount DPFPMSS is not smaller than the second threshold value PMSLMT2 larger than the third threshold value PMSLMT3, so that it is possible to determine accurately whether or not the filter 11 is actually in the excess PM-deposited state. On the other hand, during traveling of the vehicle V, the regeneration operation is inhibited when the PM deposition amount DPFPMS is not smaller than the third threshold value PMSLMT3 smaller than the second threshold value PMSLMT2, and therefore it is possible to reliably avoid execution of the regeneration operation in the excess PM-deposited state, thereby making it possible to positively prevent occurrence of cracking or melting of the filter 11 caused by overheat thereof during traveling of the vehicle V.

Further, according to the present embodiment, during traveling of the vehicle V, the regeneration operation for regenerating the filter 11 is carried out when the PM deposition amount DPFPMS estimated according to the operating conditions of the engine 3 is not smaller than the first threshold value PMSLMT1. Further, when the PM deposition amount DPFPMS is not smaller than the third threshold value PMSLMT3 (> PMSLMT1), it is judged that the filter 11 is in the excess PM-deposited state, and the warning lamp 26 is turned on. When the driver noticing the lighting of the warning lamp 26 brings the vehicle V to a service station, the regeneration operation is carried out when it is judged in the service inspection of the vehicle V that the filter 11 is not in the excess PM-deposited state.

In the regeneration operation, the differential pressure DP detected by the differential pressure sensor 22 is corrected by the square $EXQ^2$ of the exhaust gas flow rate, and the amount of change in the difference $\Delta DPC$ (= DPC (n-x) - DPC(n)) between the corrected differential pressure DPC(n-x) calculated a predetermined x number of times of calculation earlier and the current corrected differential pressure DPC(n) is calculated. Then, during execution of the regeneration operation, it is determined whether or not the differential pressure change amount $\Delta DPC$ is not larger than the threshold value DPCLMT, and when the state in which the differential pressure change amount $\Delta DPC \leqq$ the threshold value DPCLMT holds has continued for at least a time period equivalent to the predetermined value TLMT (YES to the steps 39 and 41 in FIG. 4), it is judged that the differential pressure change amount $\Delta DPC$ has converged, and the regeneration of the filter 11 has been completed, and hence the regeneration operation is terminated. This makes it possible to terminate the regeneration operation in appropriate timing in which the regeneration of the filter 11 has just been actually completed. As a result, it is possible to positively regenerate the filter 11 to reduce time and energy required to regenerate the filter 11.

Further, the differential pressure DP is corrected according to the exhaust gas flow rate EXQ, and the differential pressure change amount $\Delta DPC$ is calculated based on the corrected differential pressure DPC. This makes it possible to eliminate influence of a change in the exhaust gas flow rate EXQ on the differential pressure DP. As a result, it is possible to terminate the regeneration operation based on the differential pressure change amount $\Delta DPC$, in more appropriate timing in which the regeneration of the filter 11 is completed.

Furthermore, since the regeneration operation is executed during the service inspection of the vehicle V, the differential pressure is hardly adversely affected by changes in the operating conditions of the engine 3, and therefore it is possible to terminate the regeneration operation in appropriate timing based on the differential pressure change amount $\Delta DPC$.

It should be noted that the present invention is not limited to the embodiment described above, but can be practiced in various forms. For example, although in the above-described embodiment, the description has been given assuming that the FIG. 4 regeneration control process is carried out during service inspection of the vehicle V, this is not limitative, but the method used in the regeneration control process, for determining the timing for terminating the regeneration operation, based on the differential pressure change amount $\Delta DPC$, may be employed in the FIG. 2 traveling time regeneration control process performed during traveling of the vehicle V. Further, although in the above-described embodiment, the exhaust gas flow rate EXQ is calculated according to the engine speed NE and the intake air amount QA, this is not limitative, but the exhaust gas flow rate EXQ may be directly detected by a sensor provided in the exhaust pipe 5.

Further, although in the above-described process, the differential pressure DP is directly detected using the differential pressure sensor 22, this is not limitative, but the differential pressure DP may be determined based on the difference between detection values obtained through detections by pressure sensors arranged at respective locations upstream and downstream of the filter 11. Further, although in the above-described embodiment, the PM deposition amount DPFPMS during traveling of the vehicle V is estimated according to the operating conditions of the engine 3, it may be estimated according to the differential pressure DP detected by the differential pressure sensor 22. Furthermore, although in the above-described embodiment, the description has been given assuming that the FIG. 3 excess deposition-determining process and the FIG. 4 regeneration control process are carried out during the service inspection of the vehicle V, performed after the drive noticing the lighting of the warning lamp 26, this is not limitative, but they may be carried out during a periodic inspection of the vehicle V. Further, although in the above-described regeneration control process, the regeneration operation for regenerating the filter 11 is carried out using the post injection, the regeneration operation may be performed by another suitable method, such as a method of using the throttling of the intake throttle valve 7, together with or in place of the method of using the post injection.

Moreover, although in the above-described embodiment, the present invention is applied to the diesel engine by way of example, this is not limitative, but it can be applied to various types of engines, such as gasoline engines and engines for ship propulsion machines, such as an outboard motor having a vertically-disposed crankshaft.

An exhaust emission control system for an internal combustion engine, according to claim 1.

**Claims**

1. An exhaust emission control system for an internal combustion engine (3), for reducing exhaust emissions by collecting particulates from exhaust gases discharged from the engine to an exhaust system, comprising:

a filter (11) provided in the exhaust system (5), for collecting particulates from the exhaust gases;
regeneration operation-executing means (2; 6) for executing a regeneration operation for regenerating said filter (11) by burning the particulates deposited on said filter (11); and
a differential pressure sensor (22) for detecting a differential pressure between upstream and downstream sides of said filter (11) in the exhaust system (5);
differential pressure change amount-calculating (2) means for calculating an amount of change in the detected differential pressure in the exhaust system (5);
**characterized by**

regeneration operation-terminating means (2) for terminating the regeneration operation for regenerating said filter (11) by said regeneration operation-executing means (2, 6) when a state in which the calculated amount of change in the differential pressure is not larger than a predetermined threshold value has continued for a predetermined time period during execution of the regeneration operation by said regeneration operation-executing means (2).

2. An exhaust emission control system as claimed in claim 1, further comprising:

exhaust gas flow rate-detecting means (2, 20, 21) for detecting a flow rate of exhaust gases discharged from the engine (3); and
differential pressure-correcting means (2) for correcting the detected differential pressure according to the detected flow rate of exhaust gases, and
wherein said differential pressure change amount-calculating means (2) calculates the amount of change in the differential pressure based on the corrected differential pressure.

3. An exhaust emission control system as claimed in claim 1 or 2, wherein the engine (3) is installed on an automotive vehicle, as a drive source, and
wherein the regeneration operation for regenerating said filter (11) by said regeneration operation-executing means (2, 6) is executed during service inspection of the vehicle.

4. A method of controlling an exhaust emission control system for an internal combustion engine (3), the exhaust emission control system including a filter (11) provided in an exhaust system, for collecting particulates from the exhaust gases, and a differential pressure sensor (22) for detecting a differential pressure between upstream and downstream sides of the filter (11) in the exhaust system (5), and reducing exhaust emissions by collecting particulates from exhaust gases discharged from the engine (3) to the exhaust system, comprising:

a regeneration operation-executing step of executing a regeneration operation for regenerating the filter (11) by burning the particulates deposited on the filter (11); and
a differential pressure change amount-calculating step of calculating an amount of change in the detected differential pressure (22) in the exhaust system (5);
**characterized by**
a regeneration operation-terminating step of terminating the regeneration operation for regenerating the filter (11) in said regeneration operation-executing step when a state in which the calculated amount of change in the differential pressure is not larger than a predetermined threshold value has continued for a predetermined time period during execution of the regeneration operation in said regeneration operation-executing step.

5. A method as claimed in claim 4, further comprising:

an exhaust gas flow rate-detecting step of detecting a flow rate of exhaust gases discharged from the engine (3); and
a differential pressure-correcting step of correcting the detected differential pressure according to the detected flow rate of exhaust gases, and

wherein said differential pressure change amount-calculating step includes calculating the amount of change in the differential pressure based on the corrected differential pressure.

6. A method as claimed in claim 4 or 5, wherein the engine (3) is installed on an automotive vehicle, as a drive source, and
wherein the regeneration operation for regenerating the filter (11) in said regeneration operation-executing step is executed during service inspection of the vehicle.

**Patentansprüche**

1. Abgasemission-Steuer-/Regelsystem für eine Brennkraftmaschine (3) zur Reduzierung von Abgasemissionen durch Einfangen von Partikeln aus von der Maschine zu einem Abgassystem ausgestoßenen Abgasen, umfassend:

   einen Filter (11), der in dem Abgassystem (5) vorgesehen ist, um Partikel aus den Abgasen einzufangen;
   ein Regenerationsbetrieb-Ausführungsmittel (2, 6) zum Ausführen eines Regenerationsbetriebs zum Regenerieren des Filters (11) durch Verbrennen der an dem Filter (11) abgelagerten Partikel; und
   einen Differenzdrucksensor (22) zum Erfassen eines Differenzdrucks zwischen einer stromaufwärtigen und einer stromabwärtigen Seite des Filters (11) in dem Abgassystem (5);
   ein Differenzdruckänderungsbetrag-Berechnungsmittel (2) zum Berechnen eines Betrags einer Änderung in dem erfassten Differenzdruck in dem Abgassystem (5);
   **gekennzeichnet durch**
   Regenerationsbetrieb-Abbruchmittel (2) zum Abbrechen des Regenerationsbetriebs zum Regenerieren des Filters (11) **durch** das Regenerationsbetrieb-Ausführungsmittel (2, 6), wenn ein Zustand, in welchem der berechnete Betrag der Änderung des Differenzdrucks nicht größer ist als ein vorbestimmter Schwellwert, für eine vorbestimmte Zeitdauer während der Ausführung des Regenerationsbetriebs **durch** das Regenerationsbetrieb-Ausführungsmittel (2) angedauert hat.

2. Abgasemission-Steuer-/Regelsystem nach Anspruch 1, ferner umfassend:

   ein Abgasströmungsraten-Erfassungsmittel (2, 20, 21) zum Erfassen einer Strömungsrate von aus der Maschine (3) ausgestoßenen Abgasen und
   ein Differenzdruck-Korrekturmittel (2) zum Korrigieren des erfassten Differenzdrucks nach Maßgabe der erfassten Strömungsrate der Abgase und
   wobei das Differenzdruckänderungsbetrag-Berechnungsmittel (2) den Betrag der Änderung des Differenzdrucks auf Grundlage des korrigierten Differenzdrucks berechnet.

3. Abgasemission-Steuer-/Regelsystem nach Anspruch 1 oder 2, wobei die Maschine (3) an einem Kraftfahrzeug als Antriebsquelle installiert ist und wobei der Regenerationsbetrieb zum Regenerieren des Filters (11) durch das Regenerationsbetrieb-Ausführungsmittel (2, 6) während einer Wartungsinspektion des Fahrzeugs ausgeführt wird.

4. Verfahren zum Steuern/Regeln eines Abgasemission-Steuer-/Regelsystems für eine Brennkraftmaschine (3), wobei das Abgasemission-Steuer-/Regelsystem umfasst: einen Filter (11), der in dem Abgassystem vorgesehen ist, um Partikel aus den Abgasen einzufangen, sowie einen Differenzdrucksensor (22) zum Erfassen eines Differenzdrucks zwischen einer stromaufwärtigen und einer stromabwärtigen Seite des Filters (11) in dem Abgassystem (5), und wobei das Abgasemission-Steuer-/Regelsystem Abgasemissionen durch Einfangen von Partikeln aus von der Maschine (3) zu dem Abgassystem ausgestoßenen Abgasen reduziert, wobei das Verfahren umfasst:

   einen Regenerationsbetrieb-Ausführungsschritt zum Ausführen eines Regenerationsbetriebs zum Regenerieren des Filters (11) durch Verbrennen der an dem Filter (11) abgelagerten Partikel und einen Differenzdruckänderungsbetrag-Berechnungsschritt zum Berechnen eines Betrags einer Änderung in dem erfassten Differenzdruck (22) in dem Abgassystem (5);
   **gekennzeichnet durch**
   einen Regenerationsbetrieb-Abbruchschritt zum Abbrechen des Regenerationsbetriebs zum Regenerieren des Filters (11) in dem Regenerationsbetrieb-Ausführungsschritt, wenn ein Zustand, in welchem der berechnete Betrag der Änderung in dem Differenzdruck nicht größer ist als ein vorbestimmter Schwellwert, für eine vorbestimmte Zeitdauer während der Ausführung des Regenerationsbetriebs in dem Regenerationsbetrieb-Ausführungsschritt angedauert hat.

5. Verfahren nach Anspruch 4, ferner umfassend:

   einen Abgasströmungsraten-Erfassungsschritt zum Erfassen einer Strömungsrate von aus der Maschine (3) ausgestoßenen Abgasen; und
   einen Differenzdruck-Korrekturschritt zum Korrigieren des erfassten Differenzdrucks nach Maßgabe der erfassten Strömungsrate der Abgase und
   wobei der Differenzdruckänderungsbetrag-Berechnungsschritt eine Berechnung des Betrags der Änderung in dem Differenzdruck auf Grundlage des korrigierten Differenzdrucks umfasst.

**6.** Verfahren nach Anspruch 4 oder 5, wobei die Maschine (3) an einem Kraftfahrzeug als Antriebsquelle installiert ist und wobei der Regenerationsbetrieb zum Regenerieren des Filters (11) in dem Regenerationsbetrieb-Ausführungsschritt während einer Wartungsinspektion des Fahrzeugs ausgeführt wird.

**Revendications**

**1.** Système de régulation d'émission d'échappement pour un moteur à combustion interne (3), pour réduire des émissions d'échappement en collectant des particules à partir de gaz d'échappement déchargés à partir du moteur jusqu'à un système d'échappement, comprenant :

un filtre (11) prévu dans le système d'échappement (5), pour collecter des particules à partir des gaz d'échappement ;
des moyens d'exécution d'opération de régénération (2, 6) pour exécuter une opération de régénération pour régénérer ledit filtre (11) en brûlant les particules déposées sur ledit filtre (11) ; et
un capteur de pression différentielle (22) pour détecter une pression différentielle entre des côtés amont et aval dudit filtre (11) dans le système d'échappement (5) ;
des moyens de calcul de quantité de changement de pression différentielle (2) pour calculer une quantité de changement de la pression différentielle détectée dans le système d'échappement (5) ;

**caractérisé par**
des moyens de terminaison d'opération de régénération (2) pour terminer l'opération de régénération pour régénérer ledit filtre (11) par lesdits moyens d'exécution d'opération de régénération (2, 6) lorsqu'un état dans lequel la quantité calculée de changement de la pression différentielle n'est pas supérieure à une valeur seuil prédéterminée a continué pendant une période prédéterminée au cours de l'exécution de l'opération de régénération par lesdits moyens d'exécution d'opération de régénération (2).

**2.** Système de régulation d'émission d'échappement selon la revendication 1, comprenant en outre :

des moyens de détection de débit de gaz d'échappement (2, 20, 21) pour détecter un débit de gaz d'échappement déchargés à partir du moteur (3) ; et
des moyens de correction de pression différentielle (2) pour corriger la pression différentielle détectée selon le débit détecté de gaz d'échappement, et
dans lequel lesdits moyens de calcul de quantité de changement de pression différentielle (2) calculent la quantité de changement de la pression différentielle sur la base de la pression différentielle corrigée.

**3.** Système de régulation d'émission d'échappement selon la revendication 1 ou 2, dans lequel le moteur (3) est installé sur un véhicule automobile, en tant que source motrice, et
dans lequel l'opération de régénération pour régénérer ledit filtre (11) par lesdits moyens d'exécution d'opération de régénération (2, 6) est exécutée au cours de l'inspection de service du véhicule.

**4.** Procédé de commande d'un système de régulation d'émissions d'échappement pour un moteur à combustion interne (3), le système de régulation d'émissions d'échappement comprenant un filtre (11) prévu dans un système d'échappement, pour collecter des particules à partir des gaz d'échappement, et un capteur de pression différentielle (22) pour détecter une pression différentielle entre des côtés amont et aval du filtre (11) dans le système d'échappement (5), et réduire des émissions d'échappement en collectant des particules à partir de gaz d'échappement déchargés à partir du moteur (3) jusqu'au système d'échappement, comprenant :

une étape d'exécution d'opération de régénération consistant à exécuter une opération de régénération pour régénérer le filtre (11) en brûlant les particules déposées sur le filtre (11) ; et
une étape de calcul de quantité de changement de pression différentielle consistant à calculer une quantité de changement de la pression différentielle détectée (22) dans le système d'échappement (5) ;
**caractérisé par**
une étape de terminaison d'opération de régénération consistant à terminer l'opération de régénération pour régénérer le filtre (11) dans ladite étape d'exécution d'opération de régénération lorsqu'un état dans lequel la quantité calculée de changement de la pression différentielle n'est pas supérieure à une valeur seuil prédéterminée a continué pendant une période prédéterminée au cours de l'exécution de l'opération de régénération dans ladite étape d'exécution d'opération de régénération.

**EP 1 865 165 B1**

**5.** Procédé selon la revendication 4, comprenant en outre :

une étape de détection de débit de gaz d'échappement consistant à détecter un débit de gaz d'échappement déchargés à partir du moteur (3) ; et
une étape de correction de pression différentielle consistant à corriger la pression différentielle détectée selon le débit détecté de gaz d'échappement, et
dans lequel ladite étape de calcul de quantité de changement de pression différentielle comprend l'étape consistant à calculer la quantité de changement de la pression différentielle sur la base de la pression différentielle corrigée.

**6.** Procédé selon la revendication 4 ou 5, dans lequel le moteur (3) est installé sur un véhicule automobile, en tant que source motrice, et
dans lequel l'opération de régénération pour régénérer le filtre (11) dans ladite étape d'exécution d'opération de régénération est exécutée au cours de l'inspection de service du véhicule.

FIG. 1

# F I G. 2

```
        ┌─────────────────────────┐
        │ TRAVELING TIME          │
        │ REGENERATION CONTROL    │
        └─────────────────────────┘
                    │
                    ▼              S1
        ┌─────────────────────────┐
        │   CALCULATE DPFPMS      │
        └─────────────────────────┘
                    │
                    ▼              S2
  NO    ╱─────────────────────────╲
 ◄──────  DPFPMS ≧ PMSLMT1 ?
        ╲─────────────────────────╱
                    │ YES
                    ▼              S3
        ╱─────────────────────────╲    NO
          DPFPMS ≧ PMSLMT3 ?          ──────────────┐
        ╲─────────────────────────╱                 │
                    │ YES                            │
                    ▼              S6                │
        ┌─────────────────────────┐                 │
        │  TURN ON WARNING LAMP   │                 │
        └─────────────────────────┘                 │
                    │                                ▼
                    ▼              S7                              S4
        ┌─────────────────────────┐     ┌─────────────────────────┐
        │    F_PMSOV ← 1          │     │    F_PMSOV ← 0          │
        └─────────────────────────┘     └─────────────────────────┘
                    │                                │
                    ▼              S8                ▼              S5
        ┌─────────────────────────┐     ┌─────────────────────────┐
        │    F_REOK ← 0           │     │    F_REOK ← 1           │
        └─────────────────────────┘     └─────────────────────────┘
                    │                                │
                    ▼◄───────────────────────────────
        ┌─────────────────────────┐
        │         E N D           │
        └─────────────────────────┘
```

# F I G. 3

```
        ┌──────────────────────────┐
        │   EXCESS DEPOSITION      │
        │   DETERMINATION          │
        └──────────────────────────┘
                    │
                    ▼                    S11
        ◇────────────────────◇  YES
        │   F_CHECK = 1 ?    ├──────────┐
        ◇────────────────────◇          │
                    │ NO                 │
                    ▼         S12        │
        ┌────────────────────┐          │
        │   NEOBJ ← NECHK    │          │
        └────────────────────┘          │
                    │         S13        │
                    ▼                    │
        ┌────────────────────┐          │
        │   F_CHECK ← 1      │          │
        └────────────────────┘          │
                    │                    │
                    │◄───────────────────┘
                    ▼         S14
    NO  ◇────────────────────◇
    ┌───┤   NE ≒ NECHK ?     │
    │   ◇────────────────────◇
    │               │ YES
    │               ▼         S15
    │   ┌────────────────────┐
    │   │ CALCULATE DPFPMSS  │
    │   └────────────────────┘
    │               │         S16
    │               ▼                        NO
    │   ◇──────────────────────────◇
    │   │ DPFPMSS ≧ PMSLMT2 ?      ├────────────┐
    │   ◇──────────────────────────◇            │
    │               │ YES                        │
    │               ▼         S17                ▼          S20
    │   ┌────────────────────┐      ┌────────────────────┐
    │   │   F_PMSOVS ← 1     │      │   F_PMSOVS ← 0     │
    │   └────────────────────┘      └────────────────────┘
    │               │         S18                │          S21
    │               ▼                            ▼
    │   ┌────────────────────┐      ┌────────────────────┐
    │   │   F_REOKS ← 0      │      │   F_REOKS ← 1      │
    │   └────────────────────┘      └────────────────────┘
    │               │                            │
    │               │◄───────────────────────────┘
    │               ▼         S19
    │   ┌────────────────────┐
    │   │   F_CHECK ← 0      │
    │   └────────────────────┘
    │               │
    └──────────────►│
                    ▼
        ┌──────────────────────────┐
        │          E N D           │
        └──────────────────────────┘
```

EP 1 865 165 B1

# F I G. 4

INSPECTION-TIME REGENERATION CONTROL

S31 — F_REOKS = 1 ? — NO / YES

S32 — F_DPFRE = 1 ? — YES / NO

S33 — NEOBJ ← NERE

S34 — SET POSTQ

S35 — F_DPFRE ← 1

S36 — CALCULATE EXQ

S37 — $DPC(n) \leftarrow DP/EXQ^2$

S38 — $\Delta DPC \leftarrow DPC(n-x) - DPC(n)$

S39 — $\Delta DPC \leqq DPCLMT$ ? — NO / YES

S40 — INCREMENT TDPC

S41 — $TDPC \geqq TLMT$ ? — NO / YES

S42 — F_REOKS ← 0

S43 — NEOBJ ← NEREEND

S44 — POSTQ ← 0

S45 — F_DPFRE ← 0

S46 — RESET TDPC

END

# F I G.  5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08284643 A
- EP 1437486 A
- JP H05332125 A